# EUROPEAN PATENT SPECIFICATION

(11) **EP 3 295 516 B1**
(45) Date of publication and mention of the grant of the patent: **14.07.2021**
(21) Application number: 15723188.7
(22) Date of filing: 08.05.2015
(51) Int. Cl.: H04W 76/15, H04W 36/06, H04W 16/28

(54) **BEAMFORMING CONTROL BASED ON MONITORING OF MULTIPLE BEAMS**
STRAHLFORMUNGSSTEUERUNG BASIEREND AUF DER ÜBERWACHUNG MEHRERER STRAHLEN
COMMANDE DE FORMATION DE FAISCEAUX FONDÉE SUR LA SURVEILLANCE DE MULTIPLES FAISCEAUX

(43) Date of publication of application: 21.03.2018
(73) Proprietor: Sony Group Corporation, Tokyo 108-0075 (JP)
(72) Inventor: LARSSON, Bo, S-217 64 Malmö (SE); YING, Zhinong, S-226 48 Lund (SE); BENGTSSON, Erik, S-241 35 Eslöv (SE)
(74) Representative: Neusser, Sebastian
(86) International application number: PCT/EP2015/060173
(87) International publication number: WO 2016/180435

(56) References cited:
- EP-A2- 1 944 884
- WO-A1-2013/125993
- GB-A- 2 344 221
- US-A1- 2003 114 196
- US-B2- 8 396 513

## Description

### FIELD OF THE INVENTION

The present invention relates to a method of controlling beamforming and to correspondingly configured devices.

### BACKGROUND OF THE INVENTION

In radio communication networks, such as cellular networks, there is a general demand for increased capacity and performance, which may for example be addressed by utilizing higher frequencies, e.g., in a range above 15 GHz. However, moving to increased frequencies at the same time typically results in a reduced aperture area of antennas utilized for performing radio transmissions. As a consequence, the performance of the radio transmissions may become sensitive to relative positioning or orientation of sender and receiver.

A solution to address such reduced aperture area is to utilize an array antenna for applying a beamforming mechanism. By means of such beamforming mechanism, transmit power of the array antenna can be focused in a certain spatial direction, resulting in a two-dimensional or three-dimensional angular region in which the received signal strength experienced by the receiver is increased as compared to other angular regions. Such angular region is also referred to as "beam". In typical beamforming mechanisms, a beam having a certain direction and angular coverage is generated by feeding different antenna elements of the array antenna with correspondingly phase-shifted versions of the same transmit signal.

However, appropriately controlling the beamforming mechanism may be a demanding task. For example, in a typical cellular network, a UE (user equipment) may select between different base stations, located in different directions from the UE. The direction of a beam utilized for radio transmissions between the UE and the cellular network therefore needs to be adapted depending on the selected base station. Further, the direction of the utilized beam may also need to be adapted depending on movement of the UE. Similar problems may also arise in other radio communication scenarios, e.g., device-to-device communication between two UEs.

Accordingly, there is a need for techniques which allow for efficiently applying beamforming for radio transmissions between radio communication devices.

US8396513 discloses a radio communication device (BS) implementing a "tracking mechanism" that comprises selecting a corresponding set of auxiliary beams for a main beam, monitoring on the main beams and the corresponding auxiliary beams signals transmitted by a UE, and reselecting depending on the monitored signals a beam from at least one of the sets of auxiliary beams as one of the main beams.

EP1944884 discloses a beamforming method wherein the transceiver main antenna beam in the downlink direction is formed based on estimating direction of arrival (DoA) of received signals and measuring strength of signals received from different directions. One or more diversity beams directed towards other directions than main beam are also formed.

WO2013125993 discloses a beamforming method comprising determining a beam parameter of an antenna (i.e. the beam width an/or the beam direction of the antenna main lobe) of a first communication node based on a radio characteristic at the first radio communication node (i.e. angle of arrival, AoA and and angular spread, AS, of received signals at said node) and on properties associated with e second radio communication node (i.e. mobility and/or location information of the second radio communication node).

### SUMMARY OF THE INVENTION

The present invention is defined in the appended set of claims.

According to an example useful for the understanding of the invention, a method is provided. According to the method, a radio communication device applies a beamforming pattern defining plurality of beams. From the plurality of beams, the radio communication device selects at least one main beam and a set of auxiliary beams. In typical scenarios, the at least one main beam may be selected to have a direction in which the further radio communication device is expected to be located. The set of auxiliary beams may comprise one or more beams which are adjacent to the main beam. Exclusively on the at least one main beam, the radio communication device sends radio transmissions to a further radio communication device. Further, the radio communication device monitors signals transmitted by the further communication device on the at least one main beam and the set of auxiliary beams. Depending on the monitored signals, the communication device reselects at least one beam from the set of auxiliary beams as the at least one main beam. Accordingly, the auxiliary set of beams may be utilized to achieve an enlarged angular region in which the radio communication device can monitor signals from the further radio communication device. Such monitored signals may then be used to estimate the direction in which the further radio communication device is located and reselect the main beam accordingly. For example, if on a certain beam from the set of auxiliary beams the monitored signals indicate higher signal strength than the monitored signals on the main beam, this beam from the set of auxiliary beams may be selected as the main beam. The former main beam may then be selected as one of the auxiliary beams. It can thus be avoided that transmit power is used for beams which are not directed towards the further radio communication device.

According to an example useful for the understanding of the invention, the set of auxiliary beams is adapted depending on relative movement of the radio communication device with respect to the further radio communication device. Specifically, an angular region covered by the set of auxiliary beams may be adapted depending on a direction, speed, and/or acceleration of the relative movement. For example, if the speed or acceleration exceeds a threshold, the covered angular region may be enlarged to achieve an enhanced likelihood of successfully monitoring the signals from the further radio communication device. For similar reasons, the covered angular region may be altered if the further radio communication device is located at a distance exceeding a threshold. For example, the covered angular region could be narrowed to focus the beam and thereby improve the achievable signal quality. The covered angular region may be adapted by adapting a number of the beams in the set of auxiliary beams. By selecting a larger number of beams, the covered angular region may be enlarged. By selecting a smaller number of beams, the covered angular region may be reduced.

According to an example useful for the understanding of the invention, the procedure of reselecting at least one beam from the set of auxiliary beams as the at least one main beam further depends on relative movement of the radio communication device with respect to the further radio communication device. For example, if the further radio communication device moves in a certain direction, a future position of the further radio communication device may be estimated on the basis of the movement, and a beam directed towards the estimated future position may be selected as the main beam.

According to an example useful for the understanding of the invention, the radio communication device receives mobility information pertaining to the further radio communication device and, depending on the received mobility information, determines the relative movement of the radio communication device with respect to the further radio communication device. Such received mobility information may for example indicate a position, direction of ovement, speed, and/or acceleration of the further radio communication device, e.g., as obtained on the basis of mobility measurements performed by the further radio communication device. The mobility information may be received from the further radio communication device or from some other source, e.g., from a network node of a communication network to which the communication device and the further communication device are connected.

According to an example useful for the understanding of the invention, the radio communication device performs mobility measurements and, depending on these mobility measurements, determines the relative movement of the radio communication device with respect to the further radio communication device. The mobility measurements performed by the radio communication device may for example be based on triangulation measurements, on satellite positioning measurements, on cell selection, and/or on acceleration and/or speed sensors mounted on the radio communication device.

According to a further example useful for the understanding of the invention, a radio communication device is provided. The radio communication device comprises a radio interface. The radio interface is based on an array antenna configured to apply a beamforming pattern defining plurality of beams. Further, the radio communication device comprises at least one processor. The at least one processor is configured to select, from the plurality of beams, at least one main beam and a set of auxiliary beams. The set of auxiliary beams may comprise one or more beams which are adjacent to the main beam. Further, the at least one processor is configured to send radio transmissions to a further radio communication device exclusively on the at least one main beam. Further, the at least one processor is configured to monitor signals transmitted by the further communication device on the at least one main beam and the set of auxiliary beams. Further, the at least one processor is configured to reselect, depending on the monitored signals, at least one beam from the set of auxiliary beams as the at least one main beam.

The at least one processor may be configured to perform the steps of the above-mentioned method.

According to an example useful for the understanding of the invention, the at least one processor is configured to adapt the set of auxiliary beams depending on relative movement of the radio communication device with respect to the further radio communication device.

According to an example useful for the understanding of the invention, the at least one processor is configured to adapt, depending on a direction, speed, and/or acceleration of the relative movement, an angular region covered by the set of auxiliary beams.

According to an example useful for the understanding of the invention, the at least one processor is configured to adapt the angular region by adapting a number of the beams in the set of auxiliary beams.

According to an example useful for the understanding of the invention, the at least one processor is configured to perform the procedure of reselecting at least one beam from the set of auxiliary beams as the at least one main beam further depending on relative movement of the radio communication device with respect to the further radio communication device.

According to an example useful for the understanding of the invention, the at least one processor is configured to receive mobility information pertaining to the further radio communication device and, depending on the received mobility information, determine the relative movement of the radio communication device with respect to the further radio communication device.

According to an example useful for the understanding of the invention, the at least one processor is configured to determine, depending on mobility measurements performed by the radio communication device, the relative movement of the radio communication device with respect to the further radio communication device.

In the above examples useful for the understanding of the invention, the radio communication device may be a UE for a cellular network and the further radio communication device may be a base station of the cellular network. Alternatively, the radio communication device may a base station of a cellular network and the further radio communication device may be a UE for the cellular network. Still further, the radio communication device may and the further radio communication device may be UEs performing device-to-device communication. In this case, the device-to-device communication may be ad-hoc or network assisted. Moreover, the radio communication device and the further radio communication device may be base stations of a cellular network, or a base station and a relay station of a cellular network.

The above and further example useful for the understanding of the invention will now be described in more detail with reference to the accompanying drawings.

### BRIEF DESCRIPTION OF THE DRAWINGS

Fig. 1 schematically illustrates an example of a scenario in which radio transmissions are performed according to an embodiment of the invention.
Fig. 2 schematically illustrates an example of a beamforming mechanism which may be utilized in an embodiment of the invention.
Fig. 3 schematically illustrates an example of a beamforming mechanism which may be utilized in an embodiment of the invention.
Figs. 4, 5, and 6 schematically illustrate examples of beam selection according to an embodiment of the invention.
Fig. 7 shows a flowchart for illustrating a method according to an embodiment of the invention.
Fig. 8 schematically illustrates a processor based implementation of a radio communication device according to an embodiment of the invention.

### DETAILED DESCRIPTION OF EMBODIMENTS

In the following, exemplary embodiments of the invention will be described in more detail. It has to be understood that the following description is given only for the purpose of illustrating the principles of the invention and is not to be taken in a limiting sense. Rather, the scope of the invention is defined only by the appended claims and is not intended to be limited by the exemplary embodiments described hereinafter.

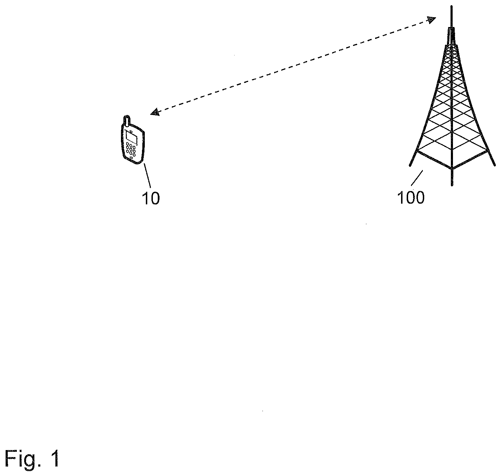

The illustrated embodiments relate to control of beamforming as applied for radio transmissions between a first radio communication device and a second radio communication device. An example of a corresponding scenario is illustrated in Fig. 1, which illustrates a UE 10 for utilization in a cellular network and a base station 100 of the cellular network. The UE 10 may for example correspond to a mobile phone, to a tablet computer, to a laptop computer, or to some other kind of mobile or stationary communication device. The cellular network may for example be based on the LTE (Long Term Evolution) radio technology as specified by 3GPP (3^{rd} Generation Partnership Project). However, other kinds of radio technology could be utilized as well.

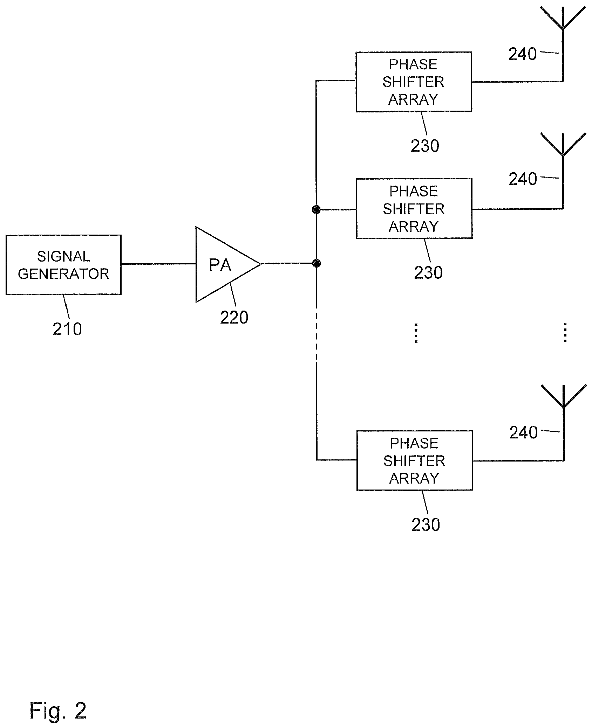

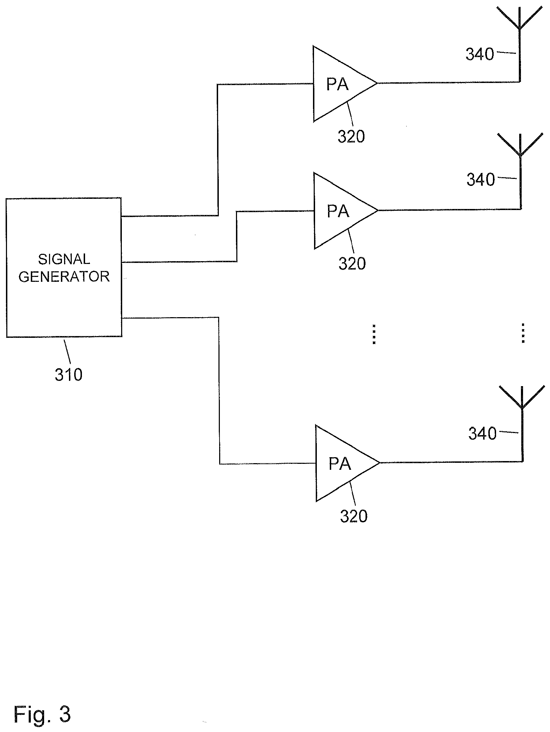

In the illustrated scenario, beamforming may be applied for uplink radio transmissions from the UE 10 to the base station 100. Further, beamforming may be applied for downlink radio transmissions from the base station 100 to the UE 10. For this purpose, the UE 10 and the base station may each be equipped with an array antenna and beamforming circuitry. Examples of a transmit section of such beamforming circuitry are schematically illustrated in Figs. 2 and 3.

In the example of Fig. 2, the beamforming circuitry includes a signal generator 210, a power amplifier (PA) 220, and a plurality of phase shifter arrays 230. The signal generator 210 provides a transmit signal, which is fed to the power amplifier 220. The power amplifier 220 amplifies the transmit signal to a desired transmit power level. Each of the phase shifter arrays 230 receives the amplified transmit signal and applies a set of different phase shifts to it. The applied phase shifts can be individually controlled for each of the phase shifter arrays 230. The phase shifted transmit signals output by each phase shifter array 230 is then fed to a corresponding antenna element 240 of an array antenna. By controlling the phase shifts applied by the different phase shifter arrays 230 a beamforming pattern defining multiple beams can be formed in the radio signals output from the array antenna. The phase shifts may be used to control the direction and number of these beams. The number of the beams may further be controlled by activating or deactivating certain antenna elements 240.

An alternative example of the beamforming circuitry is illustrated in Fig. 3. In the example of Fig. 3, the beamforming circuitry includes a signal generator 310, and a plurality of power amplifiers (PA) 320 feeding corresponding antenna elements 340 of an array antenna. The signal generator 310 generates an individual transmit signal for each antenna element 340. This may for example involve phase shifting a baseband transmit signal by digital signal processing in the signal generator. The transmit signals are fed to the power amplifiers 320. Each of the power amplifiers 320 amplifies the transmit signal to a desired transmit power level. The gains of the power amplifiers 320 can be individually controlled. The amplified transmit signal output by each power amplifier is then fed to a corresponding antenna element 340 of an array antenna. By controlling the generation of the individual transmit signals by the signal generator 310, a beamforming pattern defining multiple beams can be formed in the radio signals output from the array antenna. Specifically, the direction and number of these beams may be controlled in this way. The number of the beams may further be controlled by activating or deactivating certain antenna elements 340.

It should be noted that other implementations of the beamforming circuitry could be utilized as well. For example, phase shifter arrays as explained in connection with Fig. 2 could be applied in connection with individual power amplifiers as explained in connection with Fig. 3, e.g., by feeding the output of each phase shifter array to a corresponding power amplifier.

In the illustrated examples, the beamforming pattern which is applied for the radio transmissions defines a plurality of beams. From these beams, one is selected as a main beam. Further, a set of auxiliary beams is selected from these beams. The auxiliary beams are typically located adjacent to the main beam. The main beam is utilized by the first radio communication device for performing radio transmissions to the second radio communication device. Further, the main beam and the set of auxiliary beams is utilized by the first radio communication device for monitoring signals transmitted by the second radio communication device. This monitoring may involve receiving data signals from the second radio communication device and/or performing measurements on reference signals transmitted by the second radio communication device. The set of auxiliary beams is not utilized for performing radio transmissions from the first radio communication device to the second radio communication device.

The selection of the main beam is based on the monitoring of the signals on the main beam and the set of auxiliary beams. In particular, on the basis of this monitoring the first radio communication device can estimate which of the beams is directed towards the second radio communication device and select this beam as the main beam. Accordingly, based on the monitored signals, the main beam may be reselected from the set of auxiliary beams. This reselection may also be based on additional criteria, e.g., on a relative movement of the first radio communication device and the second radio communication device. Based on the relative movement, the first radio communication device may estimate a direction in which the second radio communication device is located and select a beam matching this direction as the main beam. The relative movement may be estimated on the basis of mobility measurements performed by the first radio communication device and/or the second radio communication device, e.g., triangulation measurements, satellite based measurements, evaluation of cell selection, and/or measurements based on acceleration and/or speed sensors mounted on the respective radio communication device. Further, the first radio communication device may also perform such mobility measurements based on the monitored signals. The second radio communication device may provide the results of such mobility measurements to the first radio communication device, where they can be utilized for estimating the relative movement. The relative movement may also be utilized as a basis for adapting the set of auxiliary beams, e.g., with respect to number of the beams in the set, angular region covered by the beams on the set, shape of each beam in the set, and/or width of each beam in the set. For example, the set of auxiliary beams may be extended by beams directed to a future location of the second radio communication device as estimated on the basis of the relative movement.

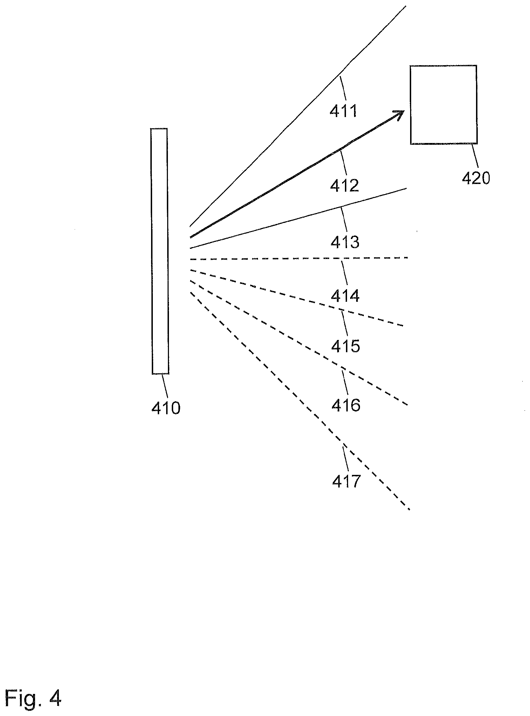

Figs. 4 to 6 schematically illustrate examples of how the beams may be selected. In particular, Figs. 4 to 6 show the array antenna 410 of the first radio communication device and the beamforming pattern generated by the array antenna 410. As illustrated, the beamforming pattern defines a plurality of beams 411, 412, 413, 414, 415, 416, 417. The beams are 411, 412, 413, 414, 415, 416, 417, illustrated by lines each having a certain direction, the main beam being identified by an arrow, and the auxiliary beams being identified by solid lines. Other beams are identified by dashed lines. Here, it is to be understood that the beams each have a certain angular coverage region, which for the sake of clarity is not shown. For example, the lines illustrating the beams 411, 412, 413, 414, 415, 416, 417 may each correspond to a beam axis, and the angular region may extend symmetrically around the beam axis. In typical scenarios, the angular coverage regions of adjacent beams will overlap to some extent. Further, Figs. 4 to 6 schematically illustrate the second radio communication device 420.

In scenario of Fig.4, the second radio communication device is shown as being located in the direction of the beam 412. Accordingly, the beam 412 is selected as the main beam and utilized for performing the radio transmissions to the second radio communication device 420. The beams 411 and 413, which are located adjacent to the beam 412, are selected as the auxiliary beams.

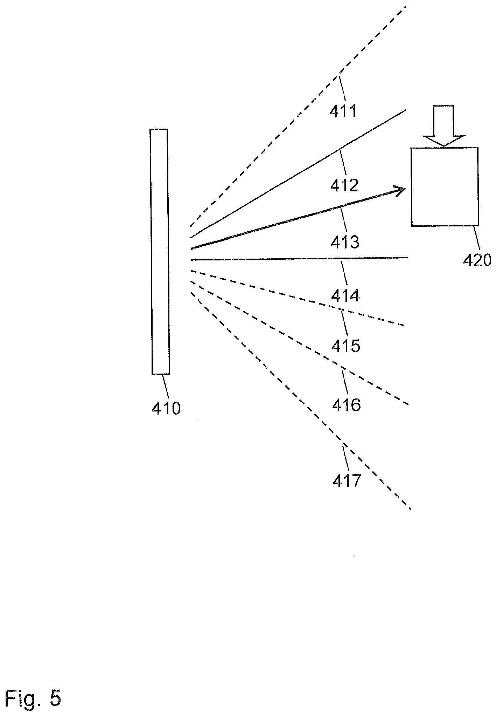

In the scenario of Fig. 5, the second radio communication device 420 has moved relative to the first radio communication device, resulting in the second radio communication device 420 now being located in the direction of the beam 413. Based on the monitoring of the signals transmitted by the second radio communication device 420, this change of position can be detected by the first radio communication device. For example, the first radio communication device may detect that the monitored signals on the beam 413 have a higher received signal strength than the monitored signals on the beams 411 and 412. Based on this observation, it is assumed that the first radio communication device select the beam 413 as the main beam and select the beams 412 and 414, which are located adjacent to the beam 413, as the auxiliary beams.

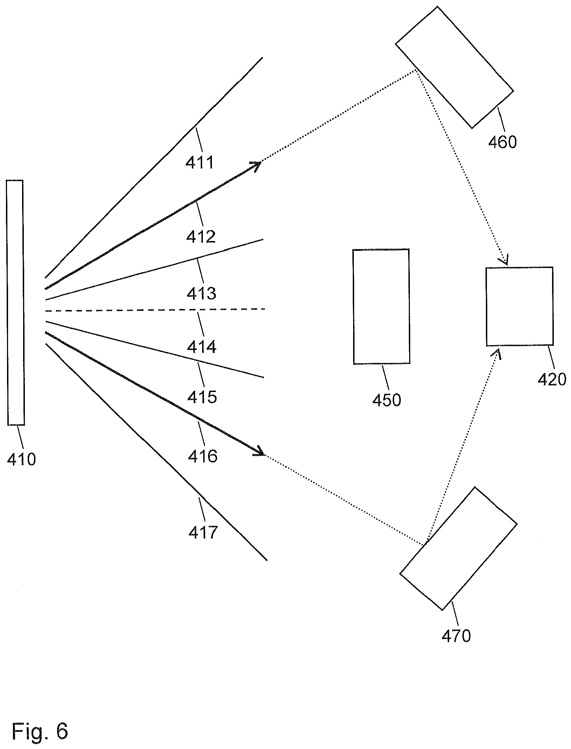

In some scenarios, the first radio communication device may also select multiple main beams. This may for example be beneficial in cases where an obstacle is located between the first radio communication device and the second radio communication device. An example of a corresponding scenario is illustrated in Fig. 6.

In the example of Fig. 6, the second radio communication device is located in the direction of the beam 414. However, an obstacle 450 is located between the first radio communication device and the second radio communication device. Further, an obstacle 460 is located in the directions of the beam 412 and an obstacle 470 is located in the direction of the beam 416. In this scenario, it is assumed that the first radio communication device selects the beams 412 and 416 as the main beams. As illustrated, radio transmissions on the beam 412 pass the obstacle 450 and are reflected by the obstacle 460 to reach the second radio communication device 420. Similarly, radio transmissions on the beam 416 pass the obstacle 450 and are reflected by the obstacle 470 to reach the second radio communication device 420. The beams 411 and 413, which are located adjacent to the beam 412, and the beams 415 and 417, which are located adjacent to the beam 416, are selected as the auxiliary beams.

The selection of Fig. 6 may also be based on the monitored signals. For example, based on knowledge of the position of the second radio communication device 420, the first radio communication device may initially select the beam 414 as the main beam and the beams 412, 413, 415, and 416 as the auxiliary beams. In this case not only the beams directly adjacent to the beam 414 would be selected as the auxiliary beam, but also the beams 412 and 416. In this way, a larger angular region may be covered by the set of auxiliary beams. Based on the monitoring of the signals from the second radio communication device 420, the first radio communication device may then detect that the received signal strength on the beams 412 and 416 is higher than on the other monitored beams 413, 414, 415 and select the beams 412 and 416 beams as the main beams.

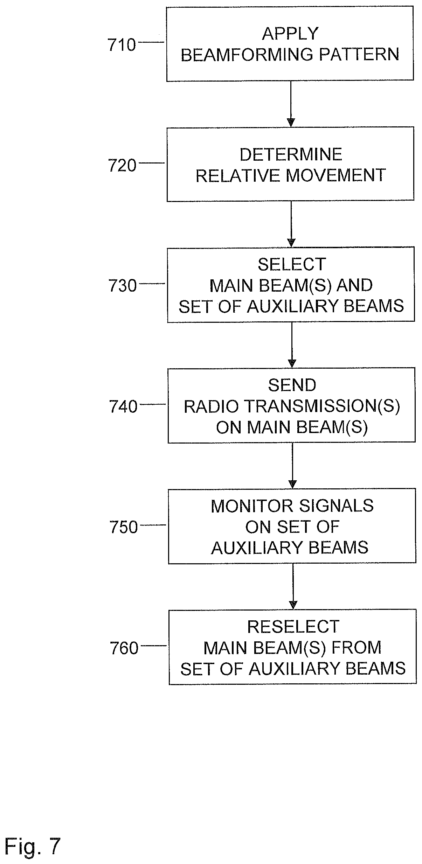

Fig. 7 shows a flowchart which illustrates a method which may be applied by a radio communication device for controlling radio transmissions to a further radio communication device. The radio communication device may for example correspond to a UE for a cellular network, e.g., the UE 10. The further radio communication device may for example correspond to a base station of the cellular network, e.g., the base station 100. Alternatively, the further radio communication device may correspond to another UE. According to a still further alternative, the radio communication device may correspond to a base station of a cellular network, e.g., the base station 100, and the further radio communication device to a UE, e.g., the UE 10. If a processor based implementation of the radio communication device is utilized, at least a part of the steps of the method may be performed and/or controlled by one or more processors of the node.

At step 710, the radio communication device applies a beamforming pattern. The beamforming pattern defines a plurality of beams. An example of such beamforming pattern is illustrated by the beams 411, 412, 413, 414, 415, 416, 417 in Figs. 4, 5, and 6. The beamforming pattern may be generated by controlling individual phase shifts of signals corresponding to different antenna elements of an array antenna, e.g., as explained in connection with the beamforming circuitry of Figs. 2 and 3.

At step 720, the radio communication device may determine a relative movement of the radio communication device and the further radio communication device.

In some scenarios, the radio communication device may receive mobility information pertaining to the further radio communication device and, depending on the received mobility information, determine the relative movement of the radio communication device with respect to the further radio communication device. The radio communication device may receive the mobility information from the further radio communication device or from some other source, e.g., from a network node of a communication network to which the communication device and the further communication device are connected. Alternatively or in addition, the radio communication device may perform mobility measurements and, depending on these mobility measurements, determine the relative movement of the radio communication device with respect to the further radio communication device. The mobility measurements may be based on, e.g., triangulation measurements, satellite based measurements, evaluation of cell selection, and/or measurements based on acceleration and/or speed sensors mounted on the radio communication device.

At step 730, the radio communication device selects at least one main beam and a set of auxiliary beams from the plurality of beams. The set of auxiliary beams may include beams which are adjacent to the at least one main beam.

At step 740, the radio communication device sends one or more radio transmissions to the further radio communication device. This is accomplished exclusively on the at least one main beam.

At step 750, the radio communication device monitors signals from the further radio communication device. This is accomplished on the at least one main beam and the set of auxiliary beams. The monitoring of signals may involve receiving data signals and/or performing measurements on reference signals.

At step 760, the radio communication device reselects the at least one main beam from the set of auxiliary beams. This is accomplished depending on the monitored signals of step 750. In some scenarios, the reselection may further depend on the relative movement determined at step 720.

In some scenarios, radio communication device may adapt the set of auxiliary beams depending on the relative movement determined at step 720. For example, depending on a direction, speed, and/or acceleration of the relative movement, the radio communication device may adapt an angular region covered by the set of auxiliary beams, e.g., by adapting a number of beams in the set of auxiliary beams.

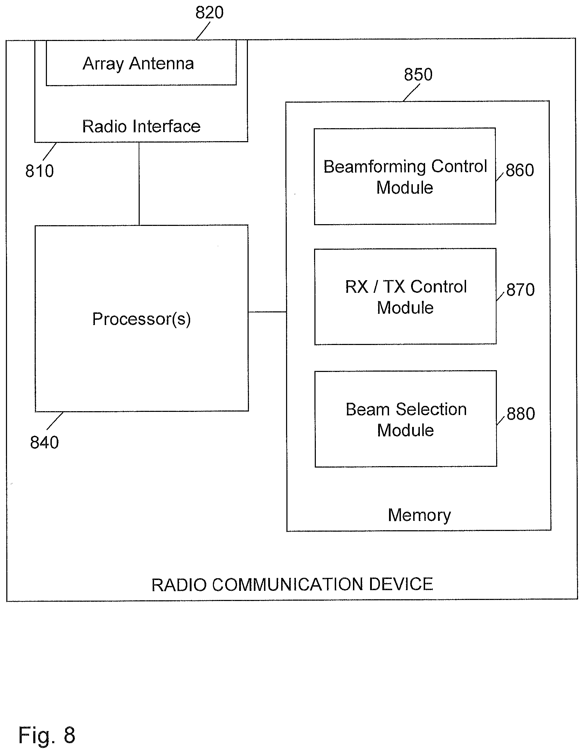

Fig. 8 shows a block diagram for schematically illustrating a processor based implementation of a radio communication device which may be utilized for implementing the above-described concepts. For example, the structures as illustrated by Fig. 8 may be utilized to implement the UE 10 or the base station 100.

As illustrated, the radio communication device includes a radio interface 810. The radio interface 810 is based on an array antenna 820. The array antenna 820 may be based on any suitable number of antenna elements, e.g., four antenna elements, eight antenna elements, 16 antenna elements. In some scenarios the number of antenna elements may also be in the range of 100 or even more. As a general rule, a larger number of antenna elements allows for more focused beams and a larger number of beams.

Further, the radio communication device is provided with one or more processors 840 and a memory 850. The radio interface 810 and the memory 850 are coupled to the processor(s) 840, e.g., using one or more internal bus systems of the radio communication device.

The memory 850 includes program code modules 860, 870, 880 with program code to be executed by the processor(s) 840. In the illustrated example, these program code modules include a beamforming control module 860, a receive (RX) / transmit (TX) control module 870, and a beam selection module 180.

The beamforming control module 860 may implement the above-described functionalities of applying a beamforming configuration defining a plurality of beams, e.g., as explained in connection with step 710 of Fig. 7.

The RX / TX control module 870 may implement the above-described functionalities of performing radio transmissions on the main beam(s) and monitoring signals on the main beam(s) and the set of auxiliary beams, e.g., as explained in connection with steps 740 and 750 of Fig. 7.

The beam selection module 880 may implement the above-described functionalities of selecting the main beam(s) and the set of auxiliary beams, e.g., as explained in connection with step 760 of Fig. 7.

It is to be understood that the structures as illustrated in Fig. 8 are merely exemplary and that the radio communication device may also include other elements which have not been illustrated, e.g., structures or program code modules for implementing known functionalities of a UE or base station.

As can be seen, the concepts as explained above allow for efficiently control of beamforming as applied for radio transmissions between different radio communication devices, even if these devices move with respect to each other. In this way, enhanced performance and/or higher transmission capacity may be achieved.

It is to be understood that the concepts as explained above are susceptible to various modifications. For example, the concepts could be applied in various kinds of devices and in connection with various kinds of radio technologies. For example, the concepts may be applied to device-to-device communication between UEs in a cellular network, to communication between base stations of a cellular network, to communication between a base station and a relay station, or to communication between nodes of a mesh network. Also, it is to be understood that while the above examples were explained with reference to two-dimensional beamforming patterns, also three-dimensional beamforming patterns may be applied. Further, it is to be understood that the concepts may be applied by providing suitably configured software to be executed by a processor of a radio communication device and/or by correspondingly configured hardware elements.

## Claims

1. A method, comprising:
- a radio communication device (10; 100) applying a beamforming pattern defining plurality of beams (411, 412, 413, 414, 415, 416, 417);
- from the plurality of beams (411, 412, 413, 414, 415, 416, 417), the radio communication device (10; 100) selecting at least one main beam and a set of auxiliary beams;
- exclusively on the at least one main beam, the radio communication device (10; 100) sending radio transmissions to a further radio communication device(10; 100);
- on the at least one main beam and the set of auxiliary beams, the radio communication device (10; 100) monitoring signals transmitted by the further communication device (10; 100);
- depending on the monitored signals, the communication device (10; 100) reselecting at least one beam from the set of auxiliary beams as the at least one main beam, and
- adapting an angular region covered by the set of auxiliary beams depending on relative movement of the radio communication device (10; 100) with respect to the further radio communication device (10; 100), wherein the angular region is adapted by adapting a number of beams in the set of auxiliary beams.

2. The method according to claim 1,
wherein the set of auxiliary beams comprises beams which are adjacent to the at least one main beam.

3. The method according to claim 1 or claim 2, comprising:
- depending on a direction, speed, and/or acceleration of the relative movement, adapting an angular region covered by the set of auxiliary beams.

4. The method according to any one of the preceding claims,
wherein said reselecting of at least one beam from the set of auxiliary beams as the at least one main beam further depends on relative movement of the radio communication device (10; 100) with respect to the further radio communication device (10; 100).

5. The method according to any one of the preceding claims, comprising:
- the radio communication device (10; 100) receiving mobility information pertaining to the further radio communication device (10; 100); and
- depending on the received mobility information, the radio communication device determining said relative movement of the radio communication device (10; 100) with respect to the further radio communication device (10; 100).

6. The method according to any one of the preceding claims, comprising:
- depending on mobility measurements performed by the radio communication device (10; 100), the radio communication device (10; 100) determining said relative movement of the radio communication device (10; 100) with respect to the further radio communication device (10; 100).

7. The method according to any one of the preceding claims,
wherein the radio communication device (10) is a user equipment for a cellular network and the further radio communication device (100) is a base station of the cellular network.

8. The method according to any one of claims 1 to 6,
wherein the radio communication device (100) is a base station of a cellular network and the further radio communication device (10) is a user equipment for the cellular network.

9. The method according to any one of claims 1 to 6,
wherein the radio communication device (10) is a user equipment for a cellular network and the further radio communication device (10) is a further user equipment for the cellular network.

10. The method according to any one of claims 1 to 6,
wherein the radio communication device (100) is a base station of a cellular network and the further radio communication device (100) is a further base station or relay station of the cellular network.

11. A radio communication device (10; 100), comprising:
a radio interface (810) based on an array antenna (820) configured to apply a beamforming pattern defining plurality of beams (411, 412, 413, 414, 415, 416, 417); and
at least one processor,
said at least one processor (840) being configured to:
- select at least one main beam and a set of auxiliary beams from the plurality of beams (411, 412, 413, 414, 415, 416, 417);
- exclusively on the at least one main beam, send radio transmissions to a further radio communication device (10; 100);
- on the at least one main beam and the set of auxiliary beams, monitor signals transmitted by the further communication device (10; 100);
- depending on the monitored signals, reselect at least one beam from the set of auxiliary beams as the at least one main beam, and
- adapt an angular region covered by the set of auxiliary beams depending on relative movement of the radio communication device (10; 100) with respect to the further radio communication device (10; 100), wherein the angular region is adapted by adapting a number of beams in the set of auxiliary beams.

12. The radio communication device (10; 100) according to claim 11, wherein the at least one processor (840) is configured to perform the steps of a method according to any one of claims 1 to 10.

## Patentansprüche

1. Verfahren, das Folgendes umfasst:
- Anwenden einer Beamforming-Charakteristik, die eine Vielzahl von Beams (411, 412, 413, 414, 415, 416, 417) definiert, durch ein Funkkommunikationsgerät (10; 100) ;
- Auswählen mindestens eines Hauptbeams und einer Menge von Nebenbeams aus der Menge von Beams (411, 412, 413, 414, 415, 416, 417) durch das Funkkommunikationsgerät (10; 100);
- Senden von Funkübertragungen ausschließlich auf dem mindestens einen Hauptbeam durch das Funkkommunikationsgerät (10; 100) an ein weiteres Funkkommunikationsgerät (10; 100);
- Überwachen von durch das weitere Kommunikationsgerät (10; 100) übertragenen Signalen durch das Funkkommunikationsgerät (10; 100) auf dem mindestens einen Hauptbeam und der Menge von Nebenbeams;
- abhängig von den überwachten Signalen erneutes Auswählen mindestens eines Beams aus der Menge von Nebenbeams als den mindestens einen Hauptbeam durch das Kommunikationsgerät (10; 100) und
- Anpassen eines von der Menge von Nebenbeams abgedeckten Winkelbereichs abhängig von einer relativen Bewegung des Funkkommunikationsgeräts (10; 100) mit Bezug auf das weitere Funkkommunikationsgerät (10; 100), wobei der Winkelbereich durch Anpassen einer Anzahl von Beams in der Menge von Nebenbeams angepasst wird.

2. Verfahren nach Anspruch 1,
wobei die Menge von Nebenbeams Beams, die zu dem mindestens einen Hauptbeam benachbart sind, umfasst.

3. Verfahren nach Anspruch 1 oder Anspruch 2, das Folgendes umfasst:
- abhängig von der Richtung, Geschwindigkeit und/oder Beschleunigung der relativen Bewegung Anpassen eines von der Menge von Nebenbeams abgedeckten Winkelbereichs.

4. Verfahren nach einem der vorhergehenden Ansprüche,
wobei das erneute Auswählen mindestens eines Beams aus der Menge von Nebenbeams als den mindestens einen Hauptbeam ferner von der relativen Bewegung des Funkkommunikationsgeräts (10; 100) mit Bezug auf das weitere Funkkommunikationsgerät (10; 100) abhängt.

5. Verfahren nach einem der vorhergehenden Ansprüche, das Folgendes umfasst:
- Empfangen von das weitere Funkkommunikationsgerät (10; 100) betreffenden Mobilitätsinformationen durch das Funkkommunikationsgerät (10; 100); und
- abhängig von den empfangenen Mobilitätsinformationen Bestimmen der relativen Bewegung des Funkkommunikationsgeräts (10; 100) mit Bezug auf das weitere Funkkommunikationsgerät (10; 100) durch das Funkkommunikationsgerät.

6. Verfahren nach einem der vorhergehenden Ansprüche, das Folgendes umfasst:
- abhängig von durch das Funkkommunikationsgerät (10; 100) durchgeführten Mobilitätsmessungen Bestimmen der relativen Bewegung des Funkkommunikationsgeräts (10; 100) mit Bezug auf das weitere Funkkommunikationsgerät (10; 100) durch das Funkkommunikationsgerät (10; 100).

7. Verfahren nach einem der vorhergehenden Ansprüche,
wobei das Funkkommunikationsgerät (10) ein Teilnehmergerät für ein zellulares Funknetz und das weitere Funkkommunikationsgerät (100) eine Basisstation des zellularen Funknetzes ist.

8. Verfahren nach einem der Ansprüche 1 bis 6,
wobei das Funkkommunikationsgerät (100) eine Basisstation eines zellularen Funknetzes und das weitere Funkkommunikationsgerät (10) ein Teilnehmergerät für das zellulare Funknetz ist.

9. Verfahren nach einem der Ansprüche 1 bis 6,
wobei das Funkkommunikationsgerät (10) ein Teilnehmergerät für ein zellulares Funknetz und das weitere Funkkommunikationsgerät (10) ein weiteres Teilnehmergerät für das zellulare Funknetz ist.

10. Verfahren nach einem der Ansprüche 1 bis 6,
wobei das Funkkommunikationsgerät (100) eine Basisstation eines zellularen Funknetzes und das weitere Funkkommunikationsgerät (100) eine weitere Basisstation oder eine Relaisstation des zellularen Funknetzes ist.

11. Funkkommunikationsgerät (10; 100), das Folgendes umfasst:
eine Funkschnittstelle (810), die auf einer Gruppenantenne (820) basiert, die konfiguriert ist, um eine Beamforming-Charakteristik, die eine Vielzahl von Beams (411, 412, 413, 414, 415, 416, 417) definiert, anzuwenden; und
mindestens einen Prozessor,
wobei der mindestens eine Prozessor (840) für Folgendes konfiguriert ist:
- Auswählen mindestens eines Hauptbeams und einer Menge von Nebenbeams aus der Vielzahl von Beams (411, 412, 413, 414, 415, 416, 417);
- Senden von Funkübertragungen ausschließlich auf dem mindestens einen Hauptbeam an ein weiteres Funkkommunikationsgerät (10; 100);
- Überwachen von durch das weitere Kommunikationsgerät (10; 100) übertragenen Signalen auf dem mindestens einen Hauptbeam und der Menge von Nebenbeams;
- abhängig von den überwachten Signalen erneutes Auswählen mindestens eines Beams aus der Menge von Nebenbeams als den mindestens einen Hauptbeam und
- Anpassen eines von der Menge von Nebenbeams abgedeckten Winkelbereichs abhängig von einer relativen Bewegung des Funkkommunikationsgeräts (10; 100) mit Bezug auf das weitere Funkkommunikationsgerät (10; 100), wobei der Winkelbereich durch Anpassen einer Anzahl von Beams in der Menge von Nebenbeams angepasst wird.

12. Funkkommunikationsgerät (10; 100) nach Anspruch 11,
wobei der mindestens eine Prozessor (840) konfiguriert ist, um die Schritte eines Verfahrens nach einem der Ansprüche 1 bis 10 durchzuführen.

## Revendications

1. Procédé, comprenant :
- un dispositif de radiocommunication (10 ; 100) appliquant un motif de formation de faisceau définissant une pluralité de faisceaux (411, 412, 413, 414, 415, 416, 417) ;
- à partir de la pluralité de faisceaux (411, 412, 413, 414, 415, 416, 417), sélectionner par le dispositif de radiocommunication (10 ; 100) au moins un faisceau principal et un ensemble de faisceaux auxiliaires ;
- exclusivement sur ledit faisceau principal, envoyer par le dispositif de radiocommunication (10 ; 100) des transmissions radio à un autre dispositif de radiocommunication (10 ; 100) ;
- sur ledit faisceau principal et l'ensemble de faisceaux auxiliaires, suivre par le dispositif de radiocommunication (10 ; 100) les signaux transmis par l'autre dispositif de communication (10 ; 100) ;
- en fonction des signaux suivis, sélectionner à nouveau par le dispositif de communication (10 ; 100) au moins un faisceau à partir de l'ensemble de faisceaux auxiliaires comme ledit faisceau principal, et
- adapter une région angulaire couverte par l'ensemble de faisceaux auxiliaires en fonction du mouvement relatif du dispositif de radiocommunication (10 ; 100) par rapport à l'autre dispositif de radiocommunication (10 ; 100), la région angulaire étant adaptée en adaptant un certain nombre de faisceaux dans l'ensemble de faisceaux auxiliaires.

2. Procédé selon la revendication 1, dans lequel l'ensemble de faisceaux auxiliaires comprend des faisceaux qui sont adjacents au dit faisceau principal.

3. Procédé selon la revendication 1 ou la revendication 2, comprenant :
- en fonction d'une direction, d'une vitesse, et/ou d'une accélération du mouvement relatif, adapter une région angulaire couverte par l'ensemble de faisceaux auxiliaires.

4. Procédé selon l'une quelconque des revendications précédentes, dans lequel ladite étape de nouvelle sélection d'au moins un faisceau à partir de l'ensemble de faisceaux auxiliaires comme ledit faisceau principal dépend en outre du mouvement relatif du dispositif de radiocommunication (10 ; 100) par rapport à l'autre dispositif de radiocommunication (10 ; 100).

5. Procédé selon l'une quelconque des revendications précédentes, comprenant :
- recevoir par le dispositif de radiocommunication (10 ; 100) des informations de mobilité concernant l'autre dispositif de radiocommunication (10 ; 100) ; et
- en fonction des informations de mobilité reçues, déterminer par le dispositif de radiocommunication ledit mouvement relatif du dispositif de radiocommunication (10 ; 100) par rapport à l'autre dispositif de radiocommunication (10 ; 100).

6. Procédé selon l'une quelconque des revendications précédentes, comprenant :
- en fonction des mesures de mobilité exécutées par le dispositif de radiocommunication (10 ; 100), déterminer par le dispositif de radiocommunication (10 ; 100) ledit mouvement relatif du dispositif de radiocommunication (10 ; 100) par rapport à l'autre dispositif de radiocommunication (10 ; 100).

7. Procédé selon l'une quelconque des revendications précédentes, dans lequel le dispositif de radiocommunication (10) est un équipement utilisateur pour un réseau cellulaire et l'autre dispositif de radiocommunication (100) est une station de base du réseau cellulaire.

8. Procédé selon l'une quelconque des revendications 1 à 6, dans lequel le dispositif de radiocommunication (100) est une station de base d'un réseau cellulaire et l'autre dispositif de radiocommunication (10) est un équipement utilisateur pour le réseau cellulaire.

9. Procédé selon l'une quelconque des revendications 1 à 6, dans lequel le dispositif de radiocommunication (10) est un équipement utilisateur pour un réseau cellulaire et l'autre dispositif de radiocommunication (10) est un autre équipement utilisateur pour le réseau cellulaire.

10. Procédé selon l'une quelconque des revendications 1 à 6, dans lequel le dispositif de radiocommunication (100) est une station de base d'un réseau cellulaire et l'autre dispositif de radiocommunication (100) est une autre station de base ou station relais du réseau cellulaire.

11. Dispositif de radiocommunication (10 ; 100), comprenant :
une interface radio (810) basée sur un réseau d'antennes (820) configuré pour appliquer un motif de formation de faisceau définissant une pluralité de faisceaux (411, 412, 413, 414, 415, 416, 417) ; et
au moins un processeur,
ledit processeur (840) étant configuré pour :
- sélectionner au moins un faisceau principal et un ensemble de faisceaux auxiliaires à partir de la pluralité de faisceaux (411, 412, 413, 414, 415, 416, 417) ;
- exclusivement sur ledit faisceau principal, envoyer des transmissions radio à un autre dispositif de radiocommunication (10 ; 100) ;
- sur ledit faisceau principal et l'ensemble de faisceaux auxiliaires, suivre les signaux transmis par l'autre dispositif de communication (10 ; 100) ;
- en fonction des signaux suivis, sélectionner à nouveau au moins un faisceau à partir de l'ensemble de faisceaux auxiliaires comme ledit faisceau principal, et
- adapter une région angulaire couverte par l'ensemble de faisceaux auxiliaires en fonction du mouvement relatif du dispositif de radiocommunication (10 ; 100) par rapport à l'autre dispositif de radiocommunication (10 ; 100), la région angulaire étant adaptée en adaptant un certain nombre de faisceaux dans l'ensemble de faisceaux auxiliaires.

12. Dispositif de radiocommunication (10 ; 100) selon la revendication 11, dans lequel ledit processeur (840) est configuré pour exécuter les étapes d'un procédé selon l'une quelconque des revendications 1 à 10.
